# EUROPÄISCHE PATENTSCHRIFT

(11) **EP 1 464 224 B1**
(45) Veröffentlichungstag und Bekanntmachung des Hinweises auf die Patenterteilung: **17.01.2007**
(21) Anmeldenummer: 04006053.5
(22) Anmeldetag: 15.03.2004
(51) Int. Cl.: A22C 11/02

(54) **Verfahren und Vorrichtung zur Herstellung von im Querschnitt mehrkantigen oder von der Kreisform abweichenden Schlauchpackungen**
Method and device for producing non-circular encased products
Dispositif et procédé de fabrication d'emballages non-tubulaires remplis d'un produit

(30) Priorität: 05.04.2003 DE 10315562
(43) Veröffentlichungstag der Anmeldung: 06.10.2004
(73) Patentinhaber: Poly-clip System GmbH & Co. KG, 60489 Frankfurt am Main (DE)
(72) Erfinder:
(74) Vertreter: Eisenführ, Speiser & Partner

(56) Entgegenhaltungen:
- EP-A- 1 174 035
- US-A- 4 434 528
- US-A- 4 646 386
- US-A- 4 920 611
- US-A- 5 104 348
- US-A- 5 378 193
- US-A- 5 468 179
- US-A- 6 050 888

## Beschreibung

Die Erfindung betrifft ein Verfahren zur Herstellung von im Querschnitt mehrkantigen oder von der Kreisform abweichenden Schlauchpackungen mit verformbarem, aber zähem bis hochviskosem Füllgut, insbesondere Wurstbrät, bei dem das Füllgut unter Druck durch ein Füllrohr in den auf seiner Außenfläche bevorrateten und vor der Mündung des Füllrohres verschlossenen Verpackungsschlauch ausgestoßen wird. Sie betrifft ferner eine Vorrichtung zur Herstellung solcher Schlauchpackungen mit einem aus zwei konzentrischen Rohren bestehenden Füllrohr, dessen Innenrohr an eine Füllmaschine anschließbar ist, während der Raum zwischen dem Außenrohr und dem Innenrohr einen Unterdruckanschluss und Ansaugöffnungen im Mündungsbereich des Füllrohres aufweist.

Beim Abfüllen von dickflüssig-zähem Füllgut, wie beispielsweise Wurstbrät, aber auch von pastösem Füllgut wie beispielsweise Kitten oder Fetten, in schlauchförmige Verpackungshüllen entsteht aufgrund des Abfülldrucks regelmäßig eine im Querschnitt kreisförmige Verpackung. In manchen Fällen ist jedoch eine andere Querschnittsform des verpackten Produkts gewünscht, beispielsweise eine Wurst mit rechteckigem, halbrundem oder ovalem Querschnitt.

Rechteckwürste sind bislang dadurch hergestellt worden, dass man die zunächst zylindrisch hergestellten Würste durch Druck entweder in einem Formkasten stationär (EP 0 065 807 B1, DE 38 40 522 C2, DE 197 53 002 C2) oder zwischen senkrecht zueinander angeordneten Bandpaaren im Durchlauf zum rechteckigen Querschnitt verformte; zu letzterem vgl. DE 20 54 441 A. In beiden Fällen muss der abgefüllten Wurst vor ihrem Verschließen zusätzlicher Verpackungsschlauch mitgegeben werden, damit sich das Füllgut innerhalb der beidseitig verschlossenen Verpackungshüllen längen kann. Denn es muss dem Umstand Rechnung getragen werden, dass bei gleichem Umfang das Rechteck eine kleinere Fläche umschreibt als der Kreis und daher eine Rechteckwurst je Längeneinheit weniger Volumen aufnimmt als eine zylindrische Wurst.

Zur Herstellung einer umfänglich gewellten Wurst ist es aus der DE 199 00 917 A1 ferner bekannt, das Füllen der Wursthülle in eine mit kreisförmig angeordneten Leisten versehene Form vorzunehmen, wobei sich die blähende Wurst an den Leisten abstützt und sich in deren Zwischenräume weitet. Die US 38 38 549 beschreibt das Verpacken von Käse, der durch eine abgeplattete Formdüse in einen auf dem Füllrohr längsgesiegelten Verpackungsschlauch gepresst wird.

Es liegt auf der Hand, dass diese bekannten Herstellungsweisen apparativ und verfahrenstechnisch aufwendig sind. Dem will die Erfindung abhelfen.

Auf der Grundlage eines zähen bis hochviskosen Füllgutes besteht der Verfahrensaspekt der Erfindung darin, dass das Füllgut beim Ausstoßen in die gewünschte Querschnittsform gebracht und gleichzeitig der Verpackungsschlauch durch Luftdruckdifferenz innerhalb und außerhalb des Verpackungsschlauches an das Füllgut gepresst wird. In Abkehr vom üblichen Vorgehen beim Abfüllen von verformbarem Füllgut in Schlauchpackungen, bei dem das Füllgut unter Druck die Schlauchhülle ausfüllt und zur zylindrischen Form aufspannt, wird erfindungsgemäß der Schlauch eng an das Füllgut gedrückt, sobald dieses das Füllrohr geformt verlassen hat. Auf diese Weise wird jeglicher Neigung zu einer neuerlichen Formveränderung entgegengewirkt, die gewünschte Querschnittsform der Packung bleibt erhalten und kann ggf. durch nachfolgende Bearbeitungsschritte weiter stabilisiert werden.

Vorzugsweise erfolgt das Anpressen der Verpackungshülle an das geformte Füllgut dadurch, dass hinter der Mündung des Füllrohres Luft aus dem Verpackungsschlauch abgesaugt und dieser dadurch an das Füllgut herangezogen wird. Beim Schlauchverpacken von stückigem Füllgut ist diese Maßnahme an sich bekannt, sie dient dort dazu, Luft zwischen den Füllgutstücken abzusaugen, um deren negativen Einfluss auf verderbliches Füllgut auszuschließen.

Vorteilhaft wird kurz vor der Mündung des Füllrohres der Druck im Füllrohr durch Querschnittserweiterung abgebaut. Dadurch wird die Gefahr minimiert, dass das aus dem Füllrohr tretende geformte Füllgut in Folge plötzlicher Entspannung verformt wird.

Die zur Herstellung von im Querschnitt mehrkantigen oder von der Kreisform abweichenden Schlauchpackungen erfindungsgemäß vorgeschlagene Vorrichtung geht davon aus, dass es - wie dargelegt - bekannt war, beim Abfüllen von stückigem Füllgut in Schlauchpackungen die Luft aus der jeweils befüllten Packung durch ein Saugrohr abzusaugen, welches ein das Füllgut führendes Innenrohr umgibt (ein solches Doppelrohr war auch zur Druckluftführung aus der DE 197 16 665 A1 bekannt). Insoweit besteht die Erfindung darin, dass die Mündung des Innenrohres von einer am Innenrohr ansetzenden Düse gebildet ist und die Querschnittsform der Schlauchpackung hat. Die Form des Mündungsquerschnitts der Düse entspricht also dem gewünschten Querschnitt des fertigen Produkts. Der in üblicher Weise auf dem Füllrohr insbesondere gerafft bereitgehaltene Verpackungsschlauch (er kann auch in situ hergestellt werden) wird über die Düsenmündung abgezogen und vom Unterdruck an die Düsenöffnung sowie danach an das Füllgut herangezogen.

Vorzugsweise erweitert sich die Düse von ihrem Ansatz am Innenrohr zu ihrer Mündung, so dass in der Düse der zur Förderung des Füllgutes durch das Innenrohr erforderliche Druck abgebaut wird.

In Weiterbildung der Erfindung ist im Bereich des Düsenansatzes am Innenrohr eine das Füllrohr konzentrisch umgebende Hülse angeordnet, deren Innenraum mit dem Raum zwischen dem Außenrohr und dem Innenrohr verbunden und gegenüber dem Außenrohr abgedichtet ist, und deren der Düse zugewandte Stirnseite die Ansaugöffnungen aufweist. Damit dient die für die Luftabsaugung vorgesehene Ausbildung zugleich als Entraffer für den vom Füllrohr abgezogenen Verpackungsschlauch. Wenn dann der größte Durchmesser der Hülse nahezu gleich dem Durchmesser des Verpackungsschlauches ist, so wird dieser vom Unterdruck an die Hülse herangezogen und dichtet den Unterdruck im Bereich der Innenrohr-Düse und im Innenraum des in der Füllung befindlichen Verpackungsschlauches gegenüber der Umgebung ab.

Anstelle der - als solche bekannten - Doppelrohr-Konstruktion kann das Anlegen eines Unterdrucks an den Raum vor der (zugleich als sogenannte Darmbremse wirkenden) Hülse und damit den Innenraum der im Füllstadium befindlichen Packung auch auf andere Weise, beispielsweise durch einen direkt an den betreffenden Raum geführten Luftschlauch erfolgen.

Die Zeichnung veranschaulicht die Erfindung an einem Ausführungsbeispiel, darin zeigt
- Figur 1: eine erfindungsgemäße Füllvorrichtung im Längsschnitt;
- Figur 2: eine Ansicht der Vorrichtung von vorn; und
- Figur 3: verschiedene andere Querschnittsformen der Düsenmündung.

Das im Ganzen mit 1 bezeichnete Füllrohr kann mit seinem Flansch 2 in üblicher Weise an einer - nicht dargestellten - Füllmaschine angesetzt werden. Flansch 2 gehört zum Innenrohr 3 des Füllrohres 1, welches konzentrisch von einem Außenrohr 4 umgeben ist. An seinem hinteren, dem Flansch 2 zugewandten Ende ist das Außenrohr 4 mittels eines O-Rings 5 gegenüber dem Innenrohr abgedichtet. Ein Ring 6, welcher den O-Ring 5 aufnimmt, hat auch eine Durchgangsöffnung, welche einen Anschluss für einen Unterdruckschlauch zu einer Vakuumquelle bildet. Die Durchgangsöffnung 7 steht mit dem Ringraum 8 zwischen dem Innenrohr 3 und dem Außenrohr 4 in Verbindung, welcher am anderen, ausstoßseitigen Ende des Füllrohres 1 in eine Hülse 9 mündet, die mit Bajonettverschlüssen 10 am Außenrohr 4 befestigt und dieser gegenüber mit einem O-Ring 11 abgedichtet ist.

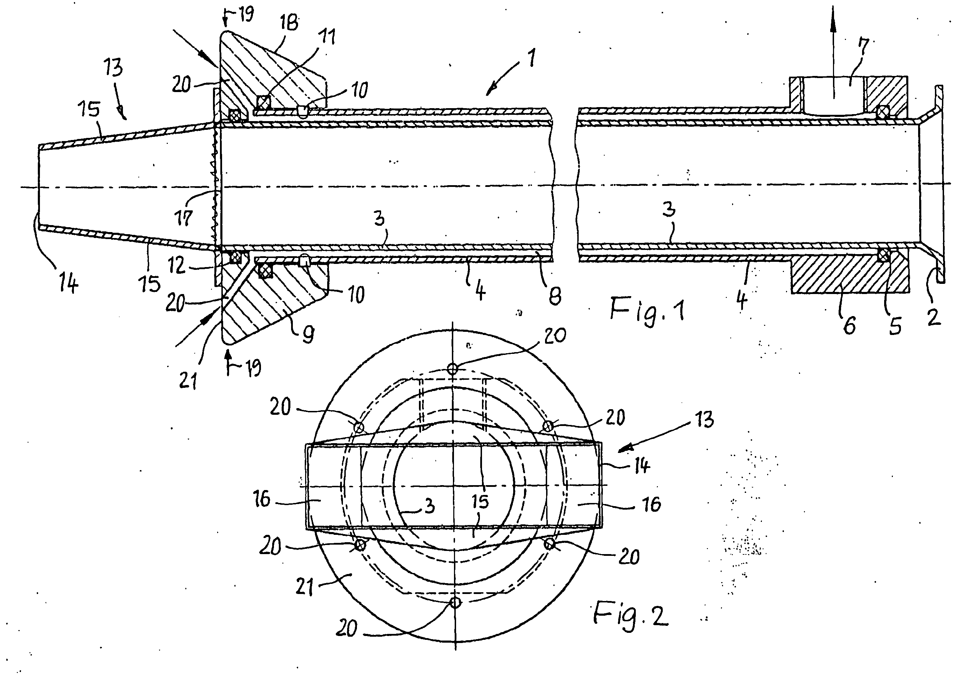

Mit einem weiteren O-Ring 12 ist die Hülse 9 auch gegenüber dem Innenrohr 3 abgedichtet. Sie trägt ausstoßseitig eine Düse 13 mit einer Mündungsöffnung 14, welche die der Figur 2 entnehmbare Rechteckform besitzt. Während die Wandungen 15 der Düse 13, welche die langen Ränder der rechteckigen Düsenöffnung 14 bilden, konvergieren, divergieren die die kurzen Ränder der Düsenmündung 14 bildenden Seitenwände 16 stark, so dass sich insgesamt die Düse 13 von ihrem Ansatz 17 am Innenrohr 3 zur Mündung 14 hin erweitert.

Die Hülse 9 hat eine keglige Außenfläche 18, die sich zur Düse 13 hin erweitert. Ihr größter Durchmesser (Pfeile 19) entspricht etwa dem Durchmesser des - nicht dargestellten - Verpackungsschlauches, der in üblicher Weise gerafft auf das Außenrohr 4 des Füllrohres 1 aufgeschoben werden kann und beim Füllen des durch das Innenrohr 3 und die Düse 13 ausgestoßenen Füllgutes über die Hülse 18 und die Düse 13 in die Füllstellung vor der Düse 13 abgezogen wird. In der Hülse 9 sind Schrägbohrungen 20 vorgesehen, die vom Raum 8 zwischen den Rohren 3, 4 zur Stirnseite 21 der Hülse 9 führen. Ein durch die Durchgangsöffnung 7 an den Raum 8 angelegter Unterdruck pflanzt sich durch die Bohrungen 20 in den vom Verpackungsschlauch gegen die Hülse 9 abgesperrten Raum vor der Stirnseite 21 der Hülse 9 und in die gerade abgefüllte Packung hin fort, so dass sich die Schlauchhülle eng an das die Mündung 14 der Düse 13 verlassende Füllgut anlegt. Bei diesem kann es sich beispielsweise um stark gekühltes (0 bis -3°C) Wurstbrät handeln.

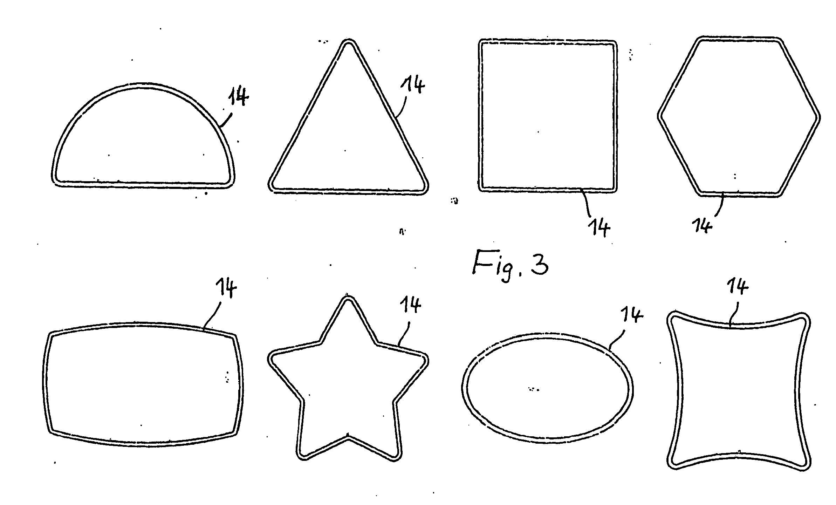

Die verschiedenen Darstellungen der Figur 3 zeigen weitere Querschnittskonfigurationen der Mündung 14 der Düse 13. Sie veranschaulichen die Vielgestaltigkeit der erfindungsgemäß ermöglichten Packungsquerschnitte.

## Patentansprüche

1. Verfahren zur Herstellung von im Querschnitt mehrkantigen oder von der Kreisform abweichenden Schlauchpackungen mit verformbarem, aber zähem bis hochviskosem Füllgut, insbesondere Wurstbrät, bei dem das Füllgut unter Druck durch ein Füllrohr in den auf seiner Außenfläche bevorrateten und vor der Mündung des Füllrohres vetschlossenen Verpackungsschlauch ausgestoßen wird,
**dadurch gekennzeichnet, dass** das Füllgut beim Ausstoßen in die gewünschte Querschnittsform gebracht und gleichzeitig der Verpackungsschlauch durch Luftdruckdifferenz innerhalb und außerhalb des Verpackungsschlauches an das Füllgut gepresst wird.

2. Verfahren nach Anspruch 1,
**dadurch gekennzeichnet, dass** kurz vor der Mündung des Füllrohres der Druck im Füllrohr durch Querschnittserweiterung abgebaut wird.

3. Verfahren nach Anspruch 1 oder 2,
**dadurch gekennzeichnet, dass** hinter der Mündung des Füllrohres Luft aus dem Verpackungsschlauch abgesaugt wird.

4. Vorrichtung zur Herstellung von im Querschnitt mehrkantigen oder von der Kreisform abweichenden Schlauchpackungen mit verformbarem Füllgut, insbesondere Wurstbrät, mit einem aus zwei konzentrischen Rohren (3, 4) bestehenden Füllrohr (1), dessen Innenrohr (3) an eine Füllmaschine anschließbar ist, während der Raum (8) zwischen dem Außenrohr (4) und dem Innenrohr (3) einen Unterdruckanschluss (7) und Ansaugöffnungen (20) im Mündungsbereich des Füllrohres (1) aufweist, wobei
die Mündung (14) des Innenrohres (3) von einer am Innenrohr (3) ansetzenden Düse (13) gebildet ist und die Querschnittsform der Schlauchpackung hat.

5. Vorrichtung nach Anspruch 4,
**dadurch gekennzeichnet, dass** sich die Düse (13) von ihrem Ansatz (17) am Innenrohr (3) zur Mündung (14) erweitert.

6. Vorrichtung nach Anspruch 4 oder 5,
**dadurch gekennzeichnet, dass** im Bereich des Düsenansatzes (17) am Innenrohr (3) eine das Füllrohr (1) konzentrisch umgebende Hülse (9) angeordnet ist, deren Innenraum mit dem Raum (8) zwischen dem Außenrohr (4) und dem Innenrohr (3) verbunden und gegenüber dem Außenrohr (4) abgedichtet ist, und deren der Düse (13) zugewandte Stirnseite (21) die Ansaugöffnungen (20) aufweist.

7. Vorrichtung nach Anspruch 6,
**dadurch gekennzeichnet,** der größte Durchmesser (19) der Hülle (9) nahezu gleich dem Durchmesser des Verpackungsschlauches ist.

## Claims

1. A method of producing tube packages, of many-sided or non-circular cross-section, with a workable, yet ductile to highly viscous, filling, in particular sausage meat, in which the filling is ejected, under pressure, through a filling pipe into the packaging tube which is supplied on its outer surface and which is sealed in front of the mouth of the filling pipe, **characterised in that** during ejection the filling is given the desired cross-sectional form and at the same time the packaging tube is, through an air pressure difference within and outside of the packaging tube, pressed against the filling.

2. A method according to claim 1, **characterised in that** just before the mouth of the filling pipe, the pressure in the filling pipe is reduced through a widening of the cross-section.

3. A method according to claim 1 or 2, **characterised in that** after the mouth of the filling pipe, air is drawn from the packaging tube.

4. A device for producing tube packages, of many-sided or non-circular cross-section, with a workable filling, in particular sausage meat, having a filling pipe (1) which is composed of two concentric pipes (3, 4) and the inner pipe (3) of which is connectable to a filling machine, while the cavity (8) between the outer pipe (4) and the inner pipe (3) has a vacuum connection (7) and suction openings (20) in the mouth region of the filling pipe (1), wherein the mouth (14) of the inner pipe (3) is formed by a nozzle (13) placed on the inner pipe (3) and has the cross-sectional form of the tube package.

5. A device according to claim 4, **characterised in that** the nozzle (13) widens from its attachment (17) on the inner pipe (3) towards the mouth (14).

6. A device according to claim 4 or 5, **characterised in that** a sleeve (9) concentrically surrounding the filling pipe (1) is arranged on the inner pipe (3) so as to be in the region of the nozzle attachment (17), the internal space of which sleeve (9) is connected to the cavity (8) between the outer pipe (4) and the inner pipe (3) and is sealed with respect to the outer pipe (4), and the front face (21), facing the nozzle (13), of which sleeve (9) has the suction openings (20).

7. A device according to claim 6, **characterised in that** the largest diameter (19) of the casing (9) is virtually identical to the diameter of the packaging tube.

## Revendications

1. Procédé de fabrication de boyaux de section transversale polygonale ou différente de la forme circulaire ayant un produit d'embossage déformable, mais visqueux à hautement visqueux, notamment de la chair à saucisses, dans lequel le produit d'embossage est expulsé sous pression en passant par un tube d'embossage dans le boyau mis à l'avance sur sa surface extérieure et fermé à l'avant de l'embouchure du tube d'embossage,
**caractérisé en ce que** lors de l'expulsion, le produit d'embossage est amené à la forme de section transversale souhaitée et **en ce que** simultanément, le boyau est pressé contre le produit d'embossage par différence de pression d'air à l'intérieur et à l'extérieur du boyau.

2. Procédé selon la revendication 1,
**caractérisé en ce que** peu avant l'embouchure du tube d'embossage, la pression se détend dans le tube d'embossage, sous l'effet d'un élargissement de la section transversale.

3. Procédé selon la revendication 1 ou 2,
**caractérisé en ce que** derrière l'embouchure du tube d'embossage, de l'air est aspiré hors du boyau.

4. Dispositif de fabrication de boyaux de section transversale polygonale ou différente de la forme circulaire ayant un produit d'embossage déformable, notamment de la chair à saucisses, comprenant un tube d'embossage (1) composé de deux tubes concentriques (3, 4), dont le tube intérieur (3) peut se raccorder sur une machine d'embossage, alors que l'espace (8) entre le tube extérieur (4) et le tube intérieur (3) comporte un branchement sur une dépression (7) et des orifices d'aspiration (20) dans la zone d'embouchure du tube d'embossage (1),
l'embouchure (14) du tube intérieur (3) étant formée par une buse (13) ajustée sur le tube intérieur (3) et ayant la forme de la section transversale du boyau.

5. Dispositif selon la revendication 4,
**caractérisé en ce que** la buse (13) s'élargit à partir de son embout (17) sur le tube intérieur (3) en direction de l'embouchure (14).

6. Dispositif selon la revendication 4 ou 5,
**caractérisé en ce qu'**il est monté sur le tube (3) intérieur, dans la zone de l'embout de buse (17), un manchon(9) entourant concentriquement le tube d'embossage (1) et dont l'intérieur communique avec l'espace (8) entre le tube extérieur (4) et le tube intérieur (3) et est étanche par rapport au tube extérieur (4), et dont la face frontale (21) tournée vers la buse (13) comporte les orifices d'aspiration (20.

7. Dispositif selon la revendication 6,
**caractérisé en ce que** le plus grand diamètre (19) du manchon (9) est à peu près égal au diamètre du boyau.
